# EUROPÄISCHE PATENTANMELDUNG

(11) **EP 1 189 104 A1**
(43) Veröffentlichungstag der Anmeldung: **20.03.2002**
(21) Anmeldenummer: 01120868.3
(22) Anmeldetag: 30.08.2001
(51) Int. Cl.: G03B 42/04

(54) **Vorrichtung zum Beladen eines Aufbewahrungsmittels für lichtempfindliches Aufzeichnungmaterial**

(30) Priorität: 07.09.2000 DE 10044249
(71) Anmelder: Agfa-Gevaert AG, 51373 Leverkusen (DE)
(72) Erfinder: Müller, Jürgen, 81545 München (DE)

(57) **Zusammenfassung**

Es wird eine Vorrichtung (1) zum Beladen eines Aufbewahrungsmittels (4) für lichtempfindliches Aufzeichnungsmaterial mit unbelichtetem, lichtempfindlichem Aufzeichnungsmaterial vorgeschlagen. Die Vorrichtung (1) enthält mehrere Vorratsmittel (10, 11, 12, 13) zum Bevorraten von unterschiedlichen Aufzeichnungsmaterialien. Erfindungsgemäß weisen die Vorratsmittel (10, 11, 12, 13) unterschiedliche Formate auf.

## Beschreibung

Die vorliegende Erfindung betrifft eine Vorrichtung zum Beladen eines Aufbewahrungsmittels für lichtempfindliches Aufzeichnungsmaterial gemäß dem Oberbegriff des Anspruchs 1.

Derartige Vorrichtungen werden z. B. in der medizinischen Diagnose und auf dem Gebiet der zerstörungsfreien Materialprüfung verwendet. Als lichtempfindliches Aufzeichnungsmaterial werden dabei blattförmige Röntgenfilme verwendet. Aufbewahrungsmittel, in die der blattförmige Röntgenfilm beladen wird, sind lichtdicht verschließbare Röntgenfilmkassetten. Sowohl aus der DE 36 10 660 C1 als auch aus der DE 44 30 688 C1 sind Vorrichtungen zum Beladen von Aufbewahrungsmitteln für lichtempfindliches Aufzeichnungsmaterial bekannt. Die beiden Patentschriften beschreiben jeweils ein Röntgenkassetten-Beladegerät, bei dem Röntgenfilm aus einem Vorratsmagazin entnommen und einer Röntgenkassette zugeführt wird. Die lichtempfindlichen Röntgenfilme werden von den Filmherstellern häufig als Blattfilmstapel in lichtdichten Hüllen ausgeliefert. Der Benutzer der bekannten Beladegeräte legt die lichtdicht verpackten Filmstapel in die Vorratsmagazine, in denen die Hülle von dem Filmstapel abgezogen wird. Zum Befüllen der Vorratsmagazine sind diese von dem Benutzer aus dem Beladegerät entnommen worden. Nach dem Auffüllen der Vorratsmagazine mit dem Röntgenfilmstapel werden die Magazine wieder in das Beladegerät eingeführt. Die aus den beiden DE-Patentschriften bekannten Beladegeräte enthalten jeweils ein Empfangsmittel, das zum Empfangen des mit dem unbelichteten Röntgenfilm beladenen Vorratsmagazins dient. Innerhalb des Beladungsgerät wird, nachdem eine Röntgenkassette über ein weiteres Empfangsmittel in das Beladegerät eingegeben wurde, diese Röntgenkassette mit dem in dem Vorratsmagazin enthaltenen Röntgenfilm beladen. Ein Blatt des Röntgenfilms wird dabei dem Vorratsmagazin entnommen und in die Röntgenkassette eingeführt. Die derart beladene Röntgenkassette wird anschließend aus dem Beladegerät ausgegeben und kann für eine Röntgenaufnahme verwendet werden. Entsprechend den vielfältigen Arten von Röntgenaufnahmen stehen eine Vielzahl von Röntgenfilmformaten und Röntgenfilmtypen zur Verfügung. Dementsprechend sind in den bekannten Röntgenkassetten-Beladegeräten eine Vielzahl von Vorratsmagazinen vorgesehen. Die Vorratsmagazine sind dabei übereinander angeordnet und haben das gleiche Format. Zum Entnehmen eines Blattes unbelichteten Röntgenfilms aus dem Vorratsmagazin wird dieses wie eine Schublade geöffnet. Über eine Saugvorrichtung kann dann der Röntgenfilm aus dem Vorratsmagazin entnommen werden.

Aus der EP 00 52 159 A1 ist ebenfalls eine Vorrichtung zum Beladen einer Röntgenfilmkassette mit blattförmigem Röntgenfilm bekannt. Auch hier sind gleichformatige Vorratsmagazine für die unterschiedlichen Röntgenfilmformate und -typen vorgesehen. Die Vorratsmagazine werden ebenfalls wie eine Schublade aufgezogen, damit über ein Saugmittel ein in dem Vorratsmagazin oben liegendes Blatt Röntgenfilm entnommen und in eine Röntgenkassette eingegeben werden kann. Zum Beladen der Röntgenkassette innerhalb der bekannten Vorrichtung ist seitlich neben den Vorratsmagazinen eine Stellfläche für die Röntgenkassette vorgesehen. Die Röntgenkassette wird zum Beladen über eine Eingabestation in die bekannte Beladevorrichtung eingeführt und darin geöffnet. Ist eines der Vorratsmagazine leer, so kann es von einem Befestigungsmittel, das es innerhalb der Beladevorrichtung fixiert, gelöst und anschließend mit neuem blattförmigem Röntgenfilm beladen werden.

Bei den bekannten Beladevorrichtungen ist jeweils der blattförmige Röntgenfilm in mehreren Vorratsmagazinen abgelegt. Diese Vorratsmagazine werden zum Beladen mit Röntgenfilm aus den bekannten Beladevorrichtungen entnommen, in einem Dunkelraum mit lichtempfindlichem, unbelichtetem Röntgenfilm beladen und nach dem Beladen wieder in die Beladevorrichtungen eingegeben. Die bekannten Vorratsmagazine haben unabhängig von dem darin befindlichen Film jeweils das gleiche Format. Sie sind so dimensioniert, dass in die Magazine der Film mit dem größten Format hineinpaßt, der mit der Beladevorrichtung in das Aufbewahrungsmittel geladen werden kann. Soll Röntgenfilm mit einem kleineren Format in den Vorratsmagazinen abgelegt werden, so sind dazu in den Magazinen vertikal durch die Magazine verlaufende Diaphragmen vorgesehen, mit denen sich der in den Magazinen zum Beladen nutzbare Platz an die Größe des zu beladenden Röntgenfilmes anpassen läßt.

Es ist die Aufgabe der vorliegenden Erfindung, eine Vorrichtung zum Beladen eines Aufbewahrungsmittels für unbelichtetes, lichtempfindliches Aufzeichnungsmaterial anzugeben, die einfach ausgestaltet und kompakt aufgebaut werden kann.

Diese Aufgabe wird gemäß der technischen Lehre des Anspruchs 1 gelöst.

Aufgrund der vorliegenden Erfindung sind mehrere Vorratsmittel zum Bevorraten von unterschiedlichem Aufzeichnungsmaterial vorhanden, die unterschiedliche Formate aufweisen. Diese unterschiedlichen Formate der Vorratsmittel können entsprechend verschiedener Formate von zu bevorratenden Aufzeichnungsmaterialien ausgestaltet sein. Auf diese Weise kann bei der Herstellung der Vorratsmittel vorteilhafterweise Herstellungsmaterial eingespart werden. Des Weiteren wird für die mehreren Vorratsmittel innerhalb der erfindungsgemäßen Vorrichtung weniger Platz benötigt. Das Volumen, das die Vorratsmittel innerhalb der erfindungsgemäßen Vorrichtung benötigen ist gering. Die erfindungsgemäße Vorrichtung kann somit kompakt ausgestaltet werden.

Die Vorratsmittel sind innerhalb der Vorrichtung vorteilhafterweise übereinander gestaffelt angeordnet. Dabei kann das kleinste Format oben und das größte Format unten platziert sein. Zum Gehäuse der erfindungsgemäßen Vorrichtung hin können die mehreren Vorratsmittel unterschiedlichen Formats bündig angeordnet sein. Dadurch steht das jeweilige untere und größere Vorratsmittel gegenüber dem benachbarten oberen und kleineren Vorratsmittel etwas über. Dieser Überstand ermöglicht es auf einfache Weise, Aufzeichnungsmaterial zum Beladen des Aufbewahrungsmittels aus dem jeweiligen Vorratsmittel herausnehmen zu können. In diesem Überstand kann nämlich eine Öffnung zum Herausnehmen des Aufzeichnungsmaterials angebracht sein. Diese Öffnung zum Herausnehmen des Aufzeichnungsmaterials aus dem Vorratsmittel kann vorteilhafterweise lichtdicht verschließbar sein. Es ist aber ebenso möglich, diese Öffnung offen zu lassen, sofern gewährleistet ist, dass in die erfindungsgemäße Vorrichtung von außen kein Licht einfällt, das das in den Vorratsmitteln abgelegte Aufzeichnungsmaterial unerwünschterweise belichten könnte.

In einer vorteilhaften Ausgestaltung der vorliegenden Erfindung kann das unbelichtete, lichtempfindliche Aufzeichnungsmaterial über ein erstes Empfangsmittel in die Vorrichtung eingegeben werden. Dieses erste Empfangsmittel ist dabei innerhalb einer Schnittstelle zu einem Dunkelraum angeordnet. Es ist daher möglich, unbelichtetes Aufzeichnungsmaterial von einem Dunkelraum aus direkt in die erfindungsgemäße Vorrichtung einzugeben. Ein aufwändiges Herausnehmen von Vorratsmitteln zum erneuten Auffüllen dieser Vorratsmittel mit unbelichtetem Aufzeichnungsmaterial ist somit nicht erforderlich.

Das erste Empfangsmittel kann vorteilhafterweise durch ein Verschlußmittel, beispielsweise von einer Bedienperson, nach außerhalb der Vorrichtung lichtdicht verschlossen werden. Somit ist gewährleistet, dass das in der erfindungsgemäßen Vorrichtung und ihren Vorratsmitteln vorhandene, unbelichtete Aufzeichnungsmaterial auch dann nicht belichtet wird, wenn die Schnittstelle, und damit das erste Empfangsmittel, Licht ausgesetzt ist.

Die erfindungsgemäße Vorrichtung kann vorteilhafterweise so aufgestellt sein, dass ein Teil ihres Gehäuses die Schnittstelle zu dem Dunkelraum bildet. Derjenige Teil des Gehäuses der erfindungsgemäßen Vorrichtung, der als Schnittstelle zu dem Dunkelraum dient, kann beispielsweise so in eine in einer Wand des Dunkelraums eingebrachte Aussparung eingeschoben werden, dass der Gehäuseteil Teil der Dunkelraumwand wird. Die Verbindungsstellen zwischen dem Gehäuseteil und der Dunkelraumwand werden dabei lichtdicht verschlossen. Der Teil des Gehäuses, der die Schnittstelle bildet, kann eine komplette Gehäuseseite der erfindungsgemäßen Vorrichtung sein. Es ist aber ebenso möglich, nur einen kleinen Ausschnitt einer Gehäuseseite als Schnittstelle zu dem Dunkelraum auszugestalten. Es ist ausreichend, eine Möglichkeit zum Empfangen des unbelichteten, lichtempfindlichen Aufzeichnungsmaterial aus der Dunkelkammer heraus in die erfindungsgemäße Vorrichtung hinein zu schaffen.

Ein zweites Empfangsmittel zum Empfangen des Aufbewahrungsmittels ist vorteilhafterweise außerhalb der Schnittstelle zu dem Dunkelraum angeordnet. Die Bedienperson kann daher einfachheitshalber das Aufbewahrungsmittel in die erfindungsgemäße Vorrichtung eingeben, ohne sich in den Dunkelraum begeben zu müssen.

In einer weiteren vorteilhaften Ausgestaltung enthält die erfindungsgemäße Vorrichtung eine Ladestation zum Abstellen und Beladen des Aufbewahrungsmittels. Diese Ladestation ist den Vorratsmitteln seitlich benachbart, so dass auch hier insbesondere hinsichtlich der Höhe der erfindungsgemäßen Vorrichtung eine sehr kompakte Anordnung möglich ist.

Die Vorratsmittel können als Schubladen ausgestaltet sein, die auf einfache Weise aus der Vorrichtung herauszieh- oder -fahrbar und in die Vorrichtung zurückgeschieb- oder -fahrbar sind. Dadurch kann das Nachfüllen der Vorratsmittel mit unbelichtetem Aufzeichnungsmaterial auf einfache Weise und problemlos von einer Bedienperson vorgenommen werden.

Weitere vorteilhafte Ausgestaltungen der Erfindung können den abhängigen Ansprüchen entnommen werden.

Im Folgenden werden die Erfindung und ihre Vorteile anhand von Ausführungsbeispielen und den Zeichnungen beschrieben.

Es zeigen:
- Fig. 1: ein Anwendungsbeispiel der erfindungsgemäßen Vorrichtung und deren Bedienungsmöglichkeiten,
- Fig. 2: eine schematische Darstellung eines ersten Ausführungsbeispiels der erfindungsgemäßen Vorrichtung,
- Fig. 3: eine schematische Darstellung einer Anordnung der Vorratsmittel sowie eines Be- und Entlademittels für eine als Aufbewahrungsmittel ausgestaltete Röntgenkassette,
- Fig. 4: eine schematische Darstellung eines zweiten Ausführungsbeispiels der erfindungsgemäßen Vorrichtung,
- Fig. 5: eine perspektivische Darstellung eines dritten Ausführungsbeispiels der erfindungsgemäßen Vorrichtung und
- Fig. 6: eine Draufsicht auf das dritte Ausführungsbeispiel der erfindungsgemäßen Vorrichtung gemäß der Fig. 5.

Im Folgenden werden für gleiche und gleich wirkende Elemente durchweg gleiche Bezugszeichen verwendet.

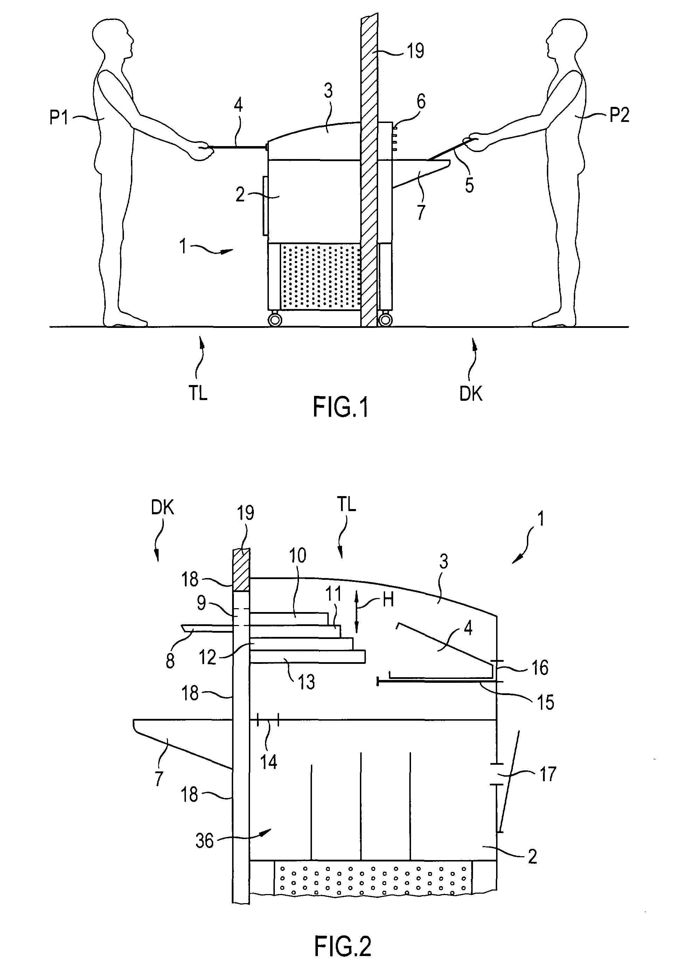

Die Fig. 1 zeigt ein Anwendungsbeispiel einer erfindungsgemäßen Verarbeitungsvorrichtung 1 zum Verarbeiten von Röntgenfilm, der hier als Aufzeichnungsmaterial dient. Verarbeiten von Röntgenfilm heißt hier insbesondere ein Entladen von Röntgenfilm aus einer Röntgenfilmkassette, ein Beladen der Röntgenfilmkassette mit Röntgenfilm und ein Entwickeln von Röntgenfilm. Die Fig. 1 zeigt schematisch eine Trennwand 19, die einen Raum, in dem die Verarbeitungsvorrichtung 1 aufgestellt ist, in eine Dunkelkammer DK und in einen Raum TL mit Tageslicht unterteilt. Die erfindungsgemäße Verarbeitungsvorrichtung 1 ragt von dem Tageslichtraum TL teilweise in die Dunkelkammer DK hinein. Dazu ist in die Trennwand 19 eine Aussparung eingebracht, in die die Verarbeitungsvorrichtung 1 eingeschoben ist. Die Dunkelkammer DK ist so stark abgedunkelt, dass auch bei offenem Hantieren mit dem lichtempfindlichen Röntgenfilm dessen Belichtung verhindert wird. Im Tageslichtraum TL ist üblicherweise Tageslicht vorhanden. Die Verarbeitungsvorrichtung 1 muß daher gegenüber dem Tageslichtraum TL lichtdicht verschlossen sein, damit innerhalb der Verarbeitungsvorrichtung verarbeiteter Röntgenfilm nicht unerwünschterweise durch das Tageslicht belichtet wird.

Die Verarbeitungsvorrichtung 1 weist einen ersten Gehäuseteil 2 und einen zweiten Gehäuseteil 3 auf. Der erste Gehäuseteil 2 ist unterhalb des zweiten Gehäuseteiles 3 angeordnet. Der obere, zweite Gehäuseteil 3 kann gegenüber dem unteren, ersten Gehäuseteil 2 verschoben werden. Im Tageslichtraum TL ist eine erste Bedienperson P1 dargestellt. Diese erste Bedienperson P1 gibt eine Röntgenkassette 4 in den zweiten Gehäuseteil 3 ein. Der zweite Gehäuseteil 3 enthält dazu eine Eingabestation zum Eingeben der Röntgenkassette 4. In der Dunkelkammer ist eine zweite Bedienperson P2 dargestellt. Diese zweite Bedienperson P2 gibt einen belichteten blattförmigen Röntgenfilm 5 in die in der Dunkelkammer befindliche Seite der Verarbeitungsvorrichtung 1 ein. An dieser Dunkelkammerseite der Verarbeitungsvorrichtung 1 ist dazu eine Direkteingabestation 7 zum Eingeben von Röntgenfilm vorgesehen. Diese Direkteingabestation 7 ist hier Teil des ersten Gehäuseteiles 2. Oberhalb der Direkteingabestation 7 sind auf der Dunkelkammerseite des zweiten Gehäuseteiles 3 mehrere Vorratsschubladen 6 vorhanden. Diese Vorratsschubladen 6 dienen zum Bevorraten von unbelichtetem Röntgenfilm. In den mehreren Vorratsschubladen 6 kann Röntgenfilm unterschiedlichen Formats oder Typs bevorratet werden. Die Bedienperson P2 kann die Vorratsschubladen 6 aus dem zweiten Gehäuseteil 3 herausziehen, um neuen, unbelichteten Röntgenfilm in die herausgezogenen Vorratsschublade einzulegen. Nach dem Einlegen des neuen, blattförmigen Röntgenfilms wird dann die Vorratsschublade 6 von der Bedienperson P2, vorzugsweise lichtdicht, verschlossen. Die Fig. 1 zeigt die von außerhalb der Verarbeitungsvorrichtung 1 zugänglichen Griffe der hier geschlossen dargestellten Vorratsschubladen 6.

Die Fig. 2 zeigt eine schematische Darstellung eines ersten Ausführungsbeispiels der Verarbeitungsvorrichtung 1. Die Verarbeitungsvorrichtung 1 enthält den ersten Gehäuseteil 2 sowie den oberhalb des ersten Gehäuseteils 2 angeordneten zweiten Gehäuseteil 3. Die Verarbeitungsvorrichtung 1 ist wiederum in eine Aussparung innerhalb der Trennwand 19 eingeschoben, so dass ein Teil der Verarbeitungsvorrichtung 1 in die Dunkelkammer DK hineinragt. Im vorliegenden Ausführungsbeispiel bildet somit eine Gehäuseseite der erfindungsgemäßen Verarbeitungsvorrichtung 1 einen Teil der Abtrennung zwischen der Dunkelkammer DK und dem Tageslichtraum TL. Die in der Fig. 2 dargestellte linke Gehäuseseite der Verarbeitungsvorrichtung 1 bildet eine Schnittstelle 18 der Verarbeitungsvorrichtung 1 zu der Dunkelkammer DK. Diese linke Gehäuseseite, d. h. die Schnittstelle 18, füllt die in der Trennwand 19 vorhandene Aussparung aus. Die Verbindungsstellen zwischen der Schnittstelle 18 und der Trennwand sind lichtdicht verschlossen.

Innerhalb der Schnittstelle 18, d. h. innerhalb dieser (linken) Gehäuseseite der Verarbeitungsvorrichtung 1, sind die Direkteingabestation 7 zum Eingeben von belichtetem, blattförmigem Röntgenfilm sowie über dieser Direkteingabestation 7 eine weitere Eingabestation 8 zum Eingeben von unbelichtetem Röntgenfilm vorgesehen. Über die Eingabestation 8 und eine lichtdicht verschließbare Öffnung 9 kann blattförmiger Röntgenfilm in innerhalb des zweiten Gehäuseteiles 3 vorhandene Filmablagefächer eingegeben werden. Die in Fig. 2 gezeigte Verarbeitungsvorrichtung 1 enthält ein erstes Filmablagefach 10, ein darunter angeordnetes, zweites Filmablagefach 11 sowie ein darunter angeordnetes, drittes Filmablagefach 12 und ein darunter angeordnetes, viertes Filmablagefach 13. Die Öffnung 9 bildet einen Durchgang von dem Inneren des zweiten Gehäuseteiles 3 nach außerhalb der Verarbeitungsvorrichtung 1, d. h. in diesem Fall zur Dunkelkammer DK. Die vier übereinander angeordneten Filmablagefächer 10-13 sind in Richtung H der Höhe der Verarbeitungsvorrichtung 1 verschiebbar. Zum Verschieben der Ablagefächer 10-13 kann ein (nicht dargestelltes) Transportmittel innerhalb des zweiten Gehäuseteiles 3 vorgesehen sein.

Die innerhalb des zweiten Gehäuseteiles 3 vorhandenen Filmablagefächer 10-13 haben hier unterschiedliche Formate. Die vier Ablagefächer 10-13 sind im Inneren des zweiten Gehäuseteiles 3 zur linken Gehäuseseite hin, d. h. zur Schnittstelle 18, bündig angeordnet. Die Ablagefächer 10-13 erstrecken sich bezüglich ihrer Längen horizontal in das Innere des zweiten Gehäuseteiles 3 hinein. Diese Längsausbreitungsrichtung der vier Ablagefächer 10-13 verläuft daher parallel zum Boden, auf dem die Verarbeitungsvorrichtung 1 aufgestellt ist, und senkrecht zur Trennwand 19. Die Länge der vier Ablagefächer 10-13, mit der sie horizontal in den Innenraum des zweiten Gehäuseteiles 3 hineinragen, ist unterschiedlich. Im vorliegenden Ausführungsbeispiel ist das Filmablagefach 13 das Ablagefach mit der größten Länge und das erste Filmablagefach 10 dasjenige Ablagefach mit der kleinsten Länge. Die vier Ablagefächer 10-13 sind ihrer Länge nach übereinander gestaffelt. Je nachdem, in welches der vier Ablagefächer 10-13 neuer, unbelichteter Röntgenfilm eingeladen werden soll, wird dieses Ablagefach auf die Höhe der Öffnung 9 hochgefahren. Über die Eingabestation 8 und die Öffnung 9 kann somit der Röntgenfilm von der Dunkelkammer aus in das jeweilige Ablagefach eingegeben werden. Die Eingabestation 8, die Öffnung 9 und die vier Ablagefächer 10-13 stellen ein Empfangsmittel zum Empfangen von unbelichtetem, lichtempfindlichem Aufzeichnungsmaterial in Form von Röntgenfilm dar. Das Verfahren der vier Ablagefächer 10-13 in die Richtung H kann beispielsweise durch eine Betätigung eines auf der Gehäuseseite 18 zur Dunkelkammer DK hin angebrachten Druckknopfes durch eine Bedienperson veranlasst werden.

Seitlich versetzt ist neben den Ablagefächern 10-13 eine Ladestation 15 in dem zweiten Gehäuseteil 3 angeordnet. Diese Ladestation 15 ist so ausgestaltet, dass sie eine von außerhalb der Verarbeitungsvorrichtung 1 eingegebene Röntgenkassette 4 aufnehmen kann. Im vorliegenden Ausführungsbeispiel ist in der rechten Gehäuseseite innerhalb des Gehäuseteiles 3 eine Eingabeöffnung 16 vorgesehen, über die die Kassette 4 von einer Bedienperson vom Tageslichtraum TL aus in das zweite Gehäuseteil 3 eingegeben werden kann. Die Eingabeöffnung 16 ist lichtdicht verschließbar, so dass auch während der Eingabe der Röntgenkassette 4 in die Ladestation 15 kein Licht von außerhalb in das zweite Gehäuseteil 3 eindringen kann. Sobald die Kassette 4 vollständig in die Ladestation 15 eingeschoben und in ihr abgestellt ist, kann sie geöffnet werden. Üblicherweise ist in einer solchen eingeschobenen Röntgenkassette ein belichteter Röntgenfilm enthalten. Dieser belichtete Röntgenfilm wird aus der Röntgenkassette 4 heraustransportiert. Die Röntgenkassette 4 ist dann leer und kann mit einem neuen, unbelichteten Blatt Röntgenfilm gefüllt werden. Dieses unbelichtete Blatt Röntgenfilm wird aus einem der vier Ablagefächer 10-13 entnommen und in die geöffnete Röntgenkassette 4 eingeführt. Die somit erneut gefüllte Röntgenkassette 4 wird anschließend lichtdicht verschlossen und über einen (nicht dargestellten) Ausgabemechanismus über die Öffnung 16 aus dem zweiten Gehäuseteil 3 ausgegeben.

Unterhalb des zweiten Gehäuseteiles 3 ist der erste Gehäuseteil 2 dargestellt. Der erste Gehäuseteil 2 enthält Entwicklungs- und Fixierbäder 36 zum Entwickeln und Fixieren von Röntgenfilm. Des Weiteren ist in dem ersten Gehäuseteil ein Trockner vorgesehen, der den in den flüssigen Chemikalien entwickelten und fixierten Film trocknet, bevor er aus dem ersten Gehäuseteil 2 ausgegeben wird. Zwischen dem ersten Gehäuseteil 2 und dem zweiten Gehäuseteil 3 ist eine Übergangsöffnung 14 vorgesehen, über die der aus der Röntgenfilmkassette 4 entladene, belichtete Röntgenfilm den Entwicklungs- und Fixierbädern 36 zugeführt wird. An der in der Fig. 2 dargestellten rechten Gehäuseseite der Verarbeitungsvorrichtung 1 ist im ersten Gehäuseteil 2 eine Austrittsöffnung 17 vorgesehen, über die der fertig entwickelte und getrocknete Röntgenfilm ausgegeben wird. Die Bedienperson kann den fertig entwickelten Röntgenfilm an der Austrittsöffnung 17 entnehmen.

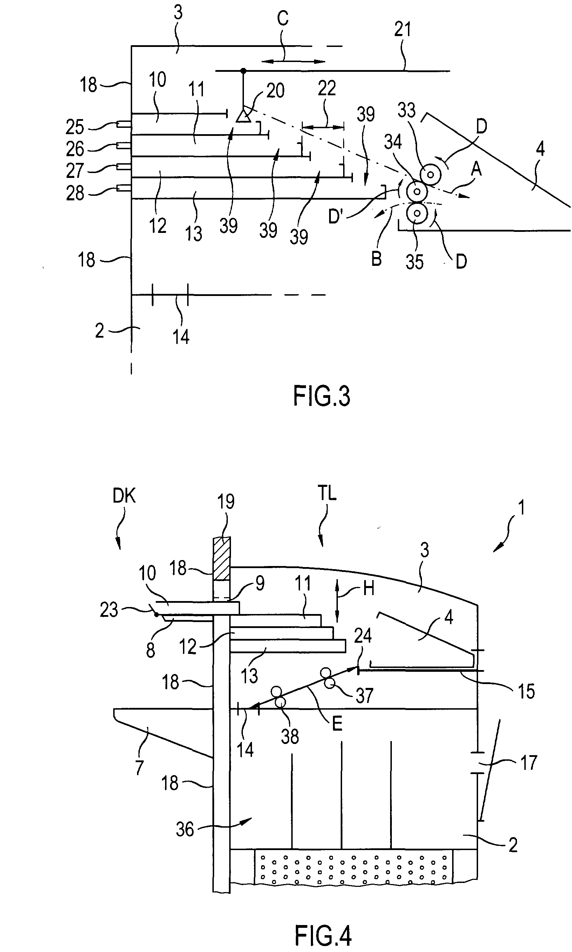

Fig. 3 zeigt eine genauere schematische Darstellung der Anordnung der Ablagefächer 10-13 für die unterschiedlichen Röntgenfilme. Diese Ablagefächer 10-13 sind hier als Schubladen ausgestaltet. Die schubladenförmig ausgestalteten Ablagefächer 10-13 können jeweils aus dem zweiten Gehäuseteil 3 heraus- und ebenfalls wieder hineingeschoben werden. Das erste Filmablagefach 10 enthält dazu einen Griff 25, das zweite Ablagefach 11 einen Griff 26, das dritte Ablagefach 12 einen Griff 27 und das vierte Ablagefach 13 einen Griff 28. Die Griffe 25-28 sind an den jeweiligen Ablagefächern 10-13 so angeordnet, dass sie einfach von der Dunkelkammerseite aus zugänglich sind.

Wie bereits oben beschrieben, ragen die Ablagefächer 10-13 in den Innenraum des zweiten Gehäuseteiles 3 hinein. Durch die unterschiedliche Ausdehnung der Ablagefächer in Längsrichtung in den Innenraum hinein entsteht zwischen zwei benachbarten Ablagefächern jeweils ein Überstand 22. Dieser Überstand 22 entspricht dem Längenunterschied zwischen jeweils zwei benachbarten Ablagefächern 10-13. An den Ablagefächern 10-13 sind an deren jeweiligen Gehäuseseiten zum Innenraum des zweiten Gehäuseteiles 2 hin im Bereich der jeweiligen Überstände 22 Öffnungen 39 vorgesehen. Über diese Öffnungen 39 kann aus dem jeweiligen Ablagefach 10-13 blattförmiger Röntgenfilm entnommen werden. Dazu enthält die Verarbeitungsvorrichtung 1 ein Entnahmemittel 20, das hier an einem Gestänge 21 befestigt ist. Das Entnahmemittel 20 kann beispielsweise ein Saugmittel sein, das das obere, in dem jeweiligen Ablagefach 10-13 abgelegte Blatt Röntgenfilm ansaugt. Das Saugmittel 20 ist entlang einer Ausbreitungsrichtung C des Gestänges 21 verfahrbar. Auf diese Weise können die Röntgenfilmblätter mittels des Saugmittels 20 aus einem der Ablagefächer 10-13 herausgezogen werden.

Die Fig. 3 zeigt des Weiteren ein Be- und Entlademittel zum Be- und Entladen der Röntgenfilmkassette 4. Das Be- und Entlademittel enthält hier drei benachbarte, übereinander angeordnete Transportrollen 33, 34 und 35. Die Transportrollen 33 und 35 sind jeweils in eine Drehrichtung D entgegen dem Uhrzeigersinn und die Transportrolle 34 in eine Drehrichtung D' im Uhrzeigersinn drehbar gelagert. Ein in der Röntgenkassette 4 enthaltener, belichteter Röntgenfilm wird über ein (nicht dargestelltes) Saug- und Transportmittel aus der Röntgenkassette 4 und zwischen die beiden Transportrollen 34 und 35 gezogen. Aufgrund der Drehung der beiden Transportrollen 34 und 35 wird der belichtete Röntgenfilm somit in Richtung der Übergangsöffnung 14 zu den Entwicklungs- und Fixierbädern 36 entlang einer Transportrichtung B transportiert. Ein aus einem der Ablagefächer 10-13 über das Entnahmemittel 20 herausgezogenes Blatt Röntgenfilm wird zwischen die beiden Transportrollen 33 und 34 geführt. Durch die Drehung der beiden Transportrollen 33 und 34 wird der entnommene Röntgenfilm entlang einer Transportrichtung A in die Röntgenkassette 4 hineintransportiert. Die somit neu beladene Röntgenkassette 4 kann anschließend aus der Ladestation 15 herausgezogen und lichtdicht verschlossen werden.

Fig. 4 zeigt eine schematische Darstellung des zweiten Ausführungsbeispiels der Verarbeitungsvorrichtung 1. Bei diesem zweiten Ausführungsbeispiel ist eine weitere Variante des Herausziehens der Ablagefächer 10-13 dargestellt. Die Fig. 4 zeigt das durch die Öffnung 9 aus dem Inneren des zweiten Gehäuseteiles 3 herausgefahrene, erste Filmablagefach 10. Das erste Filmablagefach 10 ragt nunmehr durch die Öffnung 9 und auf der Eingabestation 8 liegend in die Dunkelkammer DK hinein. Das erste Ablagefach 10 weist einen aufklappbaren Verschluss 23 auf, mit dem das Ablagefach 10 geöffnet werden kann. Durch diesen geöffneten Verschluss kann somit von einer Bedienperson unbelichtetes Röntgenfilmmaterial in das erste Ablagefach 10 auf einfache Weise eingegeben werden. Dadurch, dass die Ablagefächer 10-13 aus dem zweiten Gehäuseteil 3 herausfahrbar sind, wird das Beladen der Ablagefächer mit Röntgenfilm erleichtert. Nach Beendigen des Beladevorganges wird der Verschluss 23 verschlossen und das erste Ablagefach erneut in den Innenraum des zweiten Gehäuseteiles 3 zurückgefahren.

Fig. 4 zeigt des Weiteren eine Transporteinrichtung, mit der aus der Röntgenkassette entladener Röntgenfilm in Richtung der Entwicklungs- und Fixierbäder 36 transportiert werden kann. Dazu sind innerhalb des zweiten Gehäuseteiles 3 zwischen dem Ausgang 24 der Ladestation 15 und dem Eingang der Übergangsöffnung 14 Transportrollenpaare 37 und 38 angebracht. Diese beiden Transportrollenpaare 37 und 38 weisen jeweils zwei übereinander angeordnete Transportrollen auf, die drehbar gelagert sind. Aufgrund der von einem (nicht dargestellten) Antriebsmittel erzeugten Drehbewegung der Transportrollen wird der entladene Film von der Ladestation 15 zu der Öffnung 14 transportiert. Der Ausgang 24 der Ladestation 15 ist von der Öffnung 14 an dem Eingang zu den Entwicklungs- und Fixierbädern 36 wenigstens eine Distanz E entfernt. Diese Distanz E ist vorteilhafterweise größer als die Ausdehnung, in Transportrichtung von der Ladestation 15 zu der Öffnung 14 betrachtet, des größten Röntgenfilmformats, das mittels der Verarbeitungsvorrichtung 1 verarbeitetet werden kann. Dadurch kann gewährleistet werden, dass aufgrund der Distanz E wenigstens ein Blatt Röntgenfilm zwischen der Ladestation 15 und den Entwicklungs- und Fixierbädern 36 zwischengespeichert werden kann. Eine Entkopplung des Entnehmens von belichtetem Röntgenfilm in der Ladestation 15 und des Entwickelns von belichtetem Röntgenfilm in den Entwicklungs- und Fixierbädern 36 ist somit möglich.

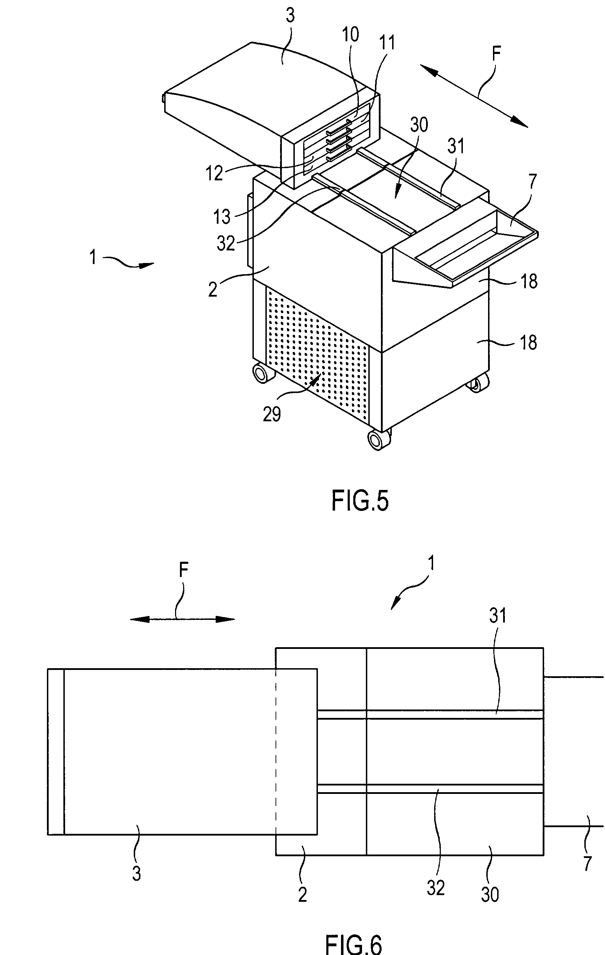

Fig. 5 zeigt eine perspektivische Darstellung des dritten Ausführungsbeispiels der Verarbeitungsvorrichtung 1. In diesem dritten Ausführungsbeispiel ist unterhalb des ersten Gehäuseteiles 2 ein Lagerraum 29 vorgesehen, der beispielsweise zum Lagern von Chemikalien o. ä. verwendet werden kann, die in die Entwicklungs- und Fixierbäder 36 nachgefüllt werden. Die Fig. 5 zeigt die Außenseiten und die Griffe der schubladenförmig ausgestalteten Ablagefächer 10-13. Der zweite Gehäuseteil 3 ist bewegbar auf dem ersten Gehäuseteil 2 angeordnet. Der zweite Gehäuseteil 3 kann in eine Transportrichtung F verschoben werden. Anstelle eines Verschiebens des zweiten Gehäuseteiles 3 wäre es ebenso denkbar, eine andere Art des Bewegens, beispielsweise ein Verkippen, des zweiten Gehäuseteiles 3 gegenüber dem ersten Gehäuseteil 2 einzurichten. Zum Verschieben des zweiten Gehäuseteiles 3 sind in einer Oberseite 30 des ersten Gehäuseteiles 2, die der unteren Seite des zweiten Gehäuseteiles 3 benachbart ist, zwei hier parallel verlaufende Führungsschienen 31 und 32 angebracht. Entlang dieser beiden Führungsschienen 31 und 32 wird der zweite Gehäuseteil 3 verschoben. Das Verschieben des zweiten Gehäuseteiles 3 ist hier so ausgestaltet, dass der zweite Gehäuseteil 3 in den Tageslichtraum TL hinein verschoben werden kann.

Es ist aber ebenso möglich, den zweiten Gehäuseteil 3 seitlich, d. h. entlang der Schnittstelle 18 zu dem Dunkelraum DK hin, zu verschieben. In diesem Falle könnten die zum Verschieben dienenden Führungsschienen senkrecht zu der hier in der Fig. 5 dargestellten Ausbreitungsrichtung der Führungsschienen 31 und 32 verlaufen. Aufgrund der Verschiebbarkeit des zweiten Gehäuseteiles 3 gegenüber dem ersten Gehäuseteil 2 ist es möglich, Zugang zu den in dem ersten Gehäuseteil 2 befindlichen Entwicklungs- und Fixierbädern 36 zu gewährleisten. Dazu kann die Oberseite 30 des ersten Gehäuseteiles 2 geöffnet werden. Die Oberseite 30 kann beispielsweise aufgeklappt oder aufgeschoben werden. Dadurch ist insbesondere ein Herausziehen der Entwicklungs- und Fixierbäder 36 aus der Verarbeitungsvorrichtung 1 nicht notwendig. Dies kann nämlich aufgrund der Verschlauchung und des Gewichts der Entwicklungs- und Fixierbäder problematisch sein.

Fig. 6 zeigt eine Draufsicht auf die Verarbeitungsvorrichtung 1 gemäß der Fig. 5. Das zweite Gehäuseteil 3 ist hier in gegenüber dem ersten Gehäuseteil 2 verschobenem Zustand dargestellt. Die Fig. 6 zeigt die beiden Führungsschienen 31 und 32, die parallel zu der Verschieberichtung F des zweiten Gehäuseteiles 3 verlaufen. Wie bereits zuvor beschrieben, dient die Oberseite 30 des ersten Gehäuseteiles 2 zum Öffnen des ersten Gehäuseteiles 2, um Zugang zu den in diesem enthaltenen Entwicklungs- und Fixierbäder 36 zu bekommen.

## Patentansprüche

1. Vorrichtung zum Beladen eines Aufbewahrungsmittels (4) für lichtempfindliches Aufzeichnungsmaterial mit unbelichtetem, lichtempfindlichem Aufzeichnungsmaterial, wobei
die Vorrichtung mehrere Vorratsmittel (10, 11, 12, 13) zum Bevorraten von unterschiedlichen Aufzeichnungsmaterialien aufweist,
**dadurch gekennzeichnet, dass**
die Vorratsmittel (10, 11, 12, 13) unterschiedliche Formate aufweisen.

2. Vorrichtung nach Anspruch 1, **dadurch gekennzeichnet, dass** die Vorratsmittel (10, 11, 12, 13) der Größe der unterschiedlichen Formate nach gestaffelt übereinander angeordnet sind.

3. Vorrichtung nach Anspruch 2, **dadurch gekennzeichnet, dass** das Vorratsmittel (10) mit dem kleinsten Format oben und das Vorratsmittel (13) mit dem größten Format unten angeordnet ist.

4. Vorrichtung nach Anspruch 2 oder 3, **dadurch gekennzeichnet, dass** die Vorratsmittel (10, 11, 12, 13) innerhalb der Vorrichtung so übereinander angeordnet sind, dass bei zwei übereinander angeordneten Vorratsmitteln (10, 11, 12, 13) unterschiedlichen Formats dasjenige Vorratsmittel (10, 11, 12, 13) mit dem größeren Format gegenüber demjenigen Vorratsmittel (10, 11, 12, 13) mit dem kleineren Format in den Innenraum der Vorrichtung hinein übersteht, wodurch ein Überstand (22) gebildet ist.

5. Vorrichtung nach Anspruch 4, **dadurch gekennzeichnet, dass** im Bereich des Überstandes (22) in dem unteren der benachbarten Vorratsmittel (10, 11, 12, 13) eine Öffnung (39) zum Entnehmen von Aufzeichnungsmaterial vorhanden ist.

6. Vorrichtung nach einem der Ansprüche 2-5, **dadurch gekennzeichnet, dass** zwei benachbarte Vorratsmittel (10, 11, 12, 13) ohne Abstand zueinander unmittelbar übereinander angeordnet sind.

7. Vorrichtung nach einem der Ansprüche 1-6, **dadurch gekennzeichnet, dass** sie eine Schnittstelle (18) zu einem Dunkelraum (DK) und ein erstes Empfangsmittel (8, 9; 10-13) zum Empfangen des unbelichteten, lichtempfindlichen Aufzeichnungsmaterials von außerhalb der Vorrichtung aufweist, wobei das erste Empfangsmittel (8, 9, 10-13) die Vorratsmittel (10, 11, 12, 13) umfasst und im Bereich der Schnittstelle (18) zu dem Dunkelraum (DK) angeordnet ist.

8. Vorrichtung nach Anspruch 7, **dadurch gekennzeichnet, dass** ein Verschlußmittel (23) zum lichtdichten Verschließen des ersten Empfangsmittels (8, 9, 10-13) nach außerhalb der Vorrichtung vorhanden ist.

9. Vorrichtung nach Anspruch 7 oder Anspruch 8, **dadurch gekennzeichnet, dass** die Vorrichtung ein Gehäuse (2, 3) aufweist und die Schnittstelle (18) ein Teil des Gehäuses ist.

10. Vorrichtung nach einem der Ansprüche 7-9, **dadurch gekennzeichnet, dass** sie ein zweites Empfangsmittel (15, 16) zum Empfangen des Aufbewahrungsmittels (4) von außerhalb der Vorrichtung aufweist und dieses zweite Empfangsmittel (15, 16) außerhalb der Schnittstelle (18) zu dem Dunkelraum (DK) angeordnet ist.

11. Vorrichtung nach einem der Ansprüche 1-10, **dadurch gekennzeichnet, dass** sie eine Ladestation (15) aufweist, in der das Aufbewahrungsmittel (4) zum Beladen mit unbelichtetem Aufzeichnungsmaterial abstellbar ist.

12. Vorrichtung nach Anspruch 11, **dadurch gekennzeichnet, dass** die Ladestation (15) den Vorratsmitteln (10, 11, 12, 13) seitlich benachbart ist.

13. Vorrichtung nach einem der Ansprüche 7-12, **dadurch gekennzeichnet, dass** die Vorratsmittel (10, 11, 12, 13) so ausgestaltet und in der Vorrichtung angebracht sind, dass sie zum Empfangen des unbelichteten Aufzeichnungsmaterials zumindest teilweise in der Vorrichtung verbleiben.

14. Vorrichtung nach einem der Ansprüche 1-13, **dadurch gekennzeichnet, dass** die Vorratsmittel (10, 11, 12, 13) verschiebbar angeordnete Schubladen sind.

15. Vorrichtung nach einem der Ansprüche 1-14, **dadurch gekennzeichnet, dass** die Vorratsmittel (10, 11, 12, 13) aus der Vorrichtung herauszieh- oder -fahrbar sind.

16. Vorrichtung nach einem der Ansprüche 1-15, **dadurch gekennzeichnet, dass** sich die Vorratsmittel (10, 11, 12, 13) bezüglich ihrer Längen in das Innere der Vorrichtung hinein erstrecken und die Längen der Vorratsmittel (10, 11, 12, 13) unterschiedlich sind.

17. Vorrichtung nach einem der Ansprüche 1-16, **dadurch gekennzeichnet, dass** das Aufzeichnungsmaterial Film für radiografische Anwendungen ist.

18. Vorrichtung nach einem der Ansprüche 1-17, **dadurch gekennzeichnet, dass** das Aufbewahrungsmittel (4) eine lichtdicht verschließbare Kassette ist.
